# FASCICULE DE BREVET EUROPEEN

(11) **EP 2 093 124 B1**
(45) Date de publication et mention de la délivrance du brevet: **10.11.2010**
(21) Numéro de dépôt: 08003172.7
(22) Date de dépôt: 21.02.2008
(51) Int. Cl.: B62B 1/20

(54) **Brouette grutable**
Kranfertige Schubkarre
Wheelbarrow which can be craned

(43) Date de publication de la demande: 26.08.2009
(73) Titulaire: MACC, 86104 Chatellerault Cédex (FR)
(72) Inventeur: Cupif, Bertrand, BP 427 86104 Chatellerault Cedex (FR)

(56) Documents cités:
- DE-A1- 1 405 738
- FR-A- 1 305 786
- FR-A- 1 430 572
- FR-A- 1 482 881
- FR-A- 2 311 701
- FR-A- 2 482 571

## Description

La présente invention concerne une brouette grutable dont l'avantage par rapport aux autres modèles existant est de conserver sa rigidité lors du transport conventionnel par roulage sur un plan horizontal.

De nombreux modèles existent avec des dispositions particulières, dont les plus aboutis ont fait l'objet des brevets décrits ci-dessous.

Brevet FR 2 742 116 (MACC) concerne une brouette dont la partie supérieure du châssis forme un berceau pour recevoir et protéger le bac.

Il existe aussi différents systèmes de levage pour une utilisation d'une grue pour une élévation de la brouette et la distribution de matériaux à différents étages.

Brevet FR 2 827 247 présente un système de préhension avec deux organes raidisseurs.

Le document FR 1 482 881 décrit une brouette grutable selon le préambule de la revendication 1.

La présente invention a pour but de réaliser une brouette solide et ergonomique qui s'utilise aussi en version grutable de façon ergonomique et rapide sans défavoriser la fonction brouette traditionnelle.

A cette fin, il a été conçu une brouette grutable selon la revendication 1 avec un châssis très rigide et monobloc ; le bac étant fixé en partie supérieure sur le bord. Le brancard est pivotant au niveau de ce cadre, ce qui permet d'avoir une position repliée du brancard horizontal et plaqué sur le bac.

Cette disposition combinée avec un système de fermeture qui en position fermée confère à l'ensemble une très grande rigidité ne diminuant pas les propriétés de la brouette.
La figure 1 présente la brouette vue de côté,
La figure 2 présente la brouette vue côté arrière
La figure 3 présente la brouette en mode grutable de côté
La figure 4 présente la brouette vue de l'arrière
La figure 5 présente une vue locale de l'articulation du brancard vue de côté.

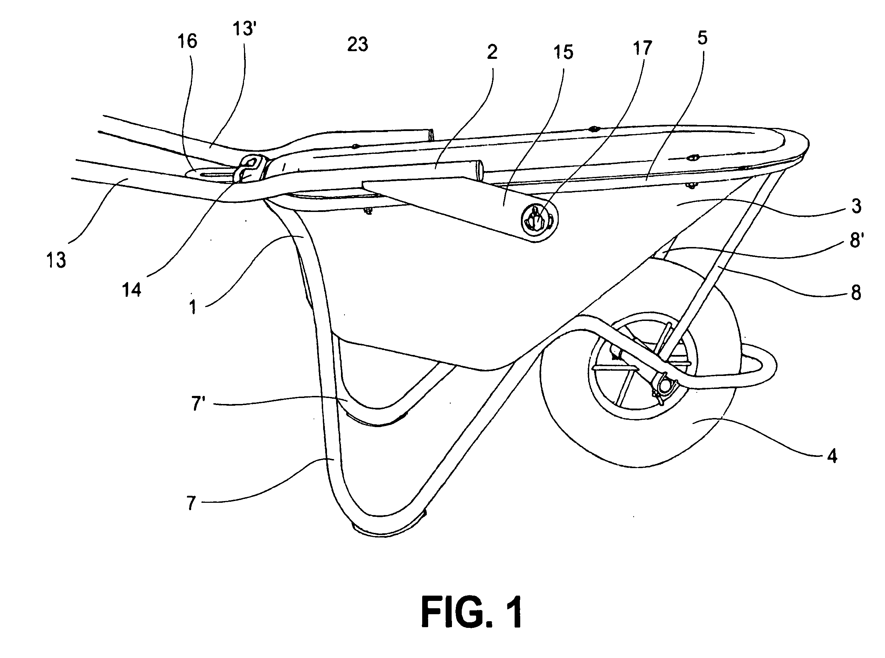

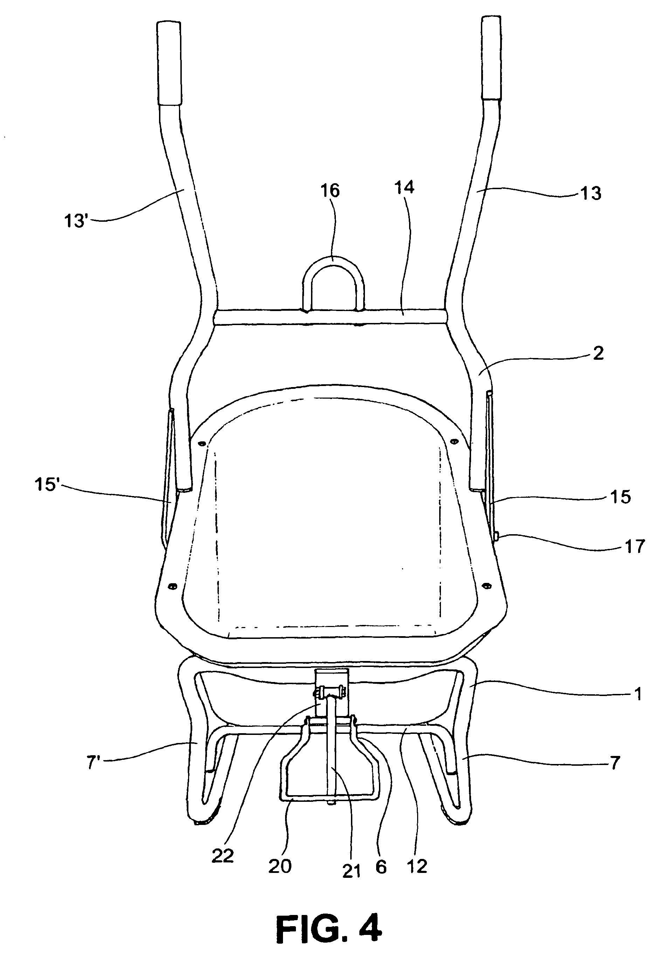

Selon les figures 1, 2, 3, 4, 5, l'objet de cette invention est composée de quatre grandes parties principales, le châssis (1), le brancard pivotant (2), le bac (3), la roue (4).

Selon les figures 1, 2, 3, 4, le bac (3) est fixé dans le châssis (1). Le rebord supérieur du bac (3) est encastré sur l'armature (5) du châssis (1) ce qui permet de ne pas avoir d'aspérités au fond du bac (3).

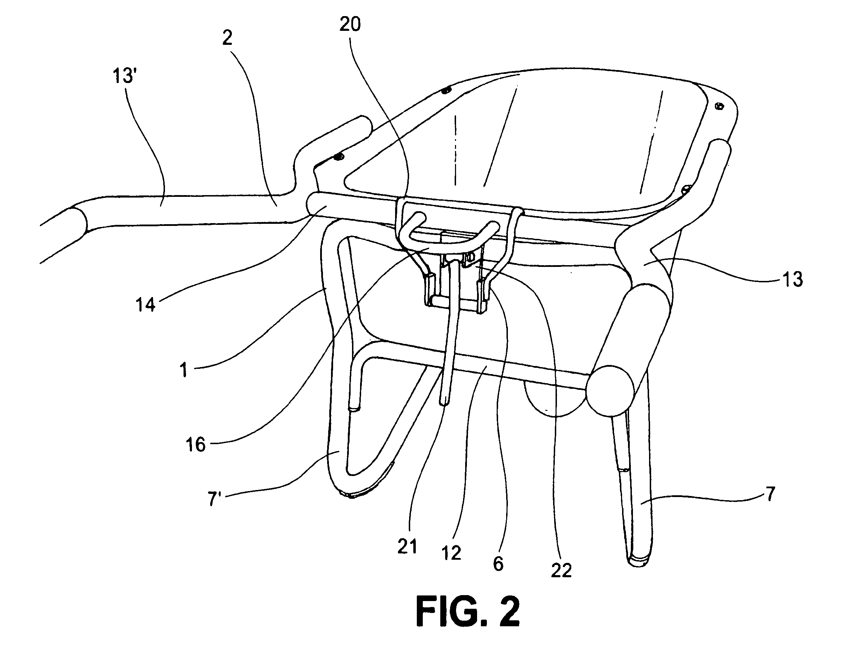

Suivant les figures 1, 2, l'armature borde le bac sur quatre côtés et permet de recevoir un système de fermeture élastique (6).

Les figures 1, 2, montrent que le châssis (1) est composé de l'armature (5) sur laquelle sont solidaires les pieds (7) (7') et les renforts (8) (8'). Ces derniers convergent vers l'avant pour rejoindre les pieds (7) (7') qui forment une fourche recevant la roue (4). Les deux pieds sont maintenus rigides par un renfort (12) qui sert aussi d'appui supplémentaire au bac (3).

Suivant les figures 1, 3, 4, 5, le brancard pivotant (2) est composé de deux bras (13) (13') qui sont reliés par un renfort (14) muni d'un anneau d'accrochage (16).

Ces bras (13) (13') pivotent grâce à des platines (15) (15') autour d'axes (17) (17') comportant deux méplats (18) (18') solidaires du châssis (1). Ces bras (13) (13') se situent alors au dessus du bac (3) permettant d'avoir un produit compact et moins encombrant.

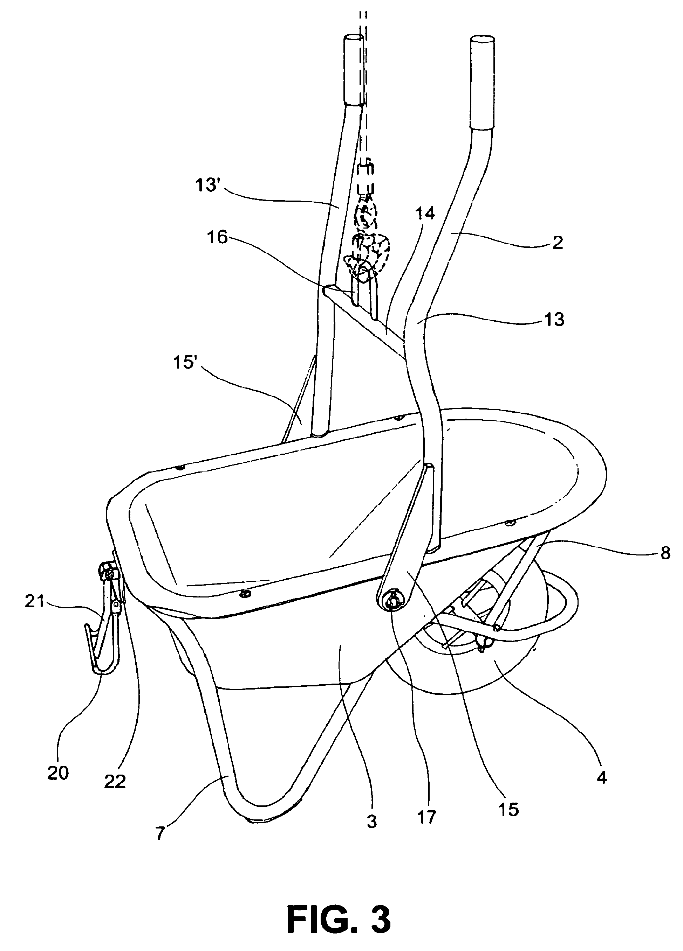

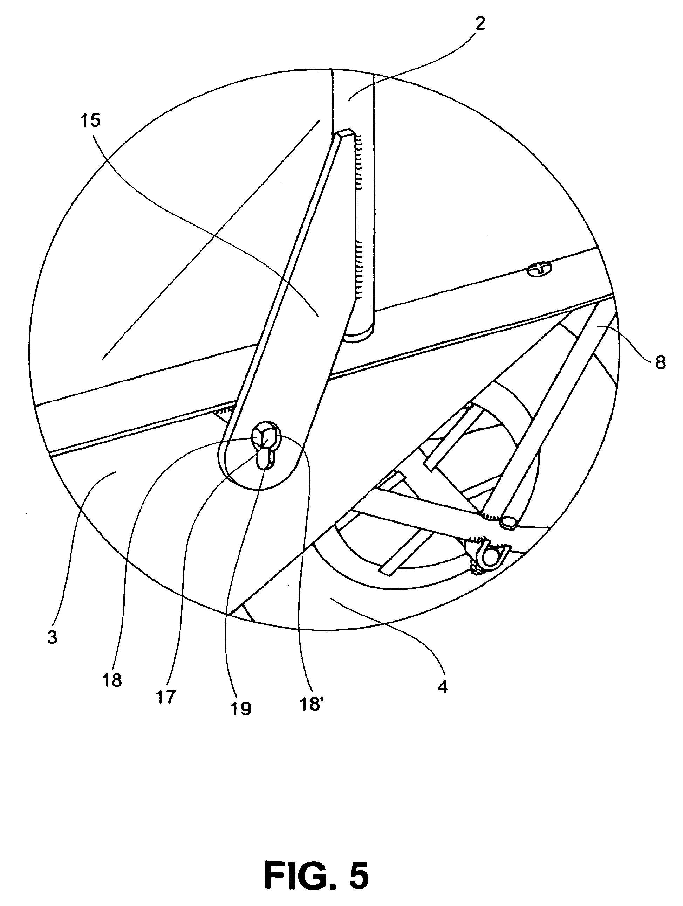

Suivant les figures 3, 5, les platines (15) (15') comportent des formes oblongues (19) (19') qui viennent s'adapter automatiquement sur les deux méplats (18) (18') des axes (17) (17') lorsque le brancard pivotant (2) est en position verticale et qu'un câble accroché à l'anneau (16) vient exercer un effort de levage, de façon à ce que le bac reste en position horizontale.

Les figures 2, 3, 4, représentent un système de fermeture élastique (6) composé d'un crochet (20) et d'une poignée de manoeuvre (21) articulée dans une chape (22) solidaire du châssis (1).

Le crochet (20) est articulé sur la poignée de manoeuvre (21) permettant de passer par-dessus le renfort (14) du brancard pivotant (2), et par une poussée vers le bas de la poignée de manoeuvre (21) on obtient un serrage et une immobilisation du brancard pivotant (2).

## Revendications

1. Brouette grutable composée d'un châssis (1), d'un bac (3), d'une roue (4), d'une armature (5), d'un brancard pivotant (2) lui-même composé de bras (13) (13'), d'un renfort (14) pourvu d'un anneau (16), **caractérisée en ce que** les bras (13) (13') du brancard pivotant (2) s'articulent autour d' axes (17) (17') qui se situent en dessous de l'armature (5) au moyen de platines (15) (15') permettant aux bras (13) (13') dans leur intégralité d'être au dessus du bac (3) et d'obtenir ainsi un produit compact et moins encombrant.

2. Brouette grutable selon revendication 1 **caractérisée en ce qu'**un système de fermeture élastique (6), centré à l'arrière du châssis (1) solidarise le brancard pivotant (2) au châssis (1) permettant d'obtenir une rigidité similaire à une brouette standard non grutable.

## Claims

1. A crane-loadable wheelbarrow comprising a chassis (1), a tray (3), a wheel (4), a frame (5), a turning handle (2) itself comprising arms (13) (13') and a reinforcement (14) with a ring (16), **characterised in that** the arms (13) (13') of the turning handle (2) are articulated around shafts (17) (17') that are located under the frame (5) with platens (15) (15') that allow the totality of the arms (13) (13') to be above the tray (3) and thus make up a compact and less bulky product.

2. A crane-loadable wheelbarrow according to claim 1 **characterised in that** an elastic closing system (6) centred on the rear of the chassis (1) makes the turning handle (2) integral with the chassis (1) to achieve rigidity similar to a standard non crane-loadable wheelbarrow.

## Patentansprüche

1. Mit einem Kran tragbare Schubkarre bestehend aus einem Radgestell (1), einer Wanne (3), einem Rad (4), einem Rahmen (5), einer schwenkbaren Deichsel (2), die selbst aus Armen (13) (13') und einer Verstärkung (14) mit einem Ring (16) besteht, **dadurch gekennzeichnet, dass** die Arme (13) (13') der schwenkbaren Deichsel (2) mittels Platinen (15) (15') um Achsen (17) (17') herum angeordnet sind, die sich unter dem Rahmen (5) befinden und den Armen (13) (13') ermöglichen, vollständig über der Wanne (3) zu sein und somit ein kompaktes und platzsparendes Produkt zu erzielen.

2. Mit einem Kran tragbare Schubkarre nach Anspruch 1, **dadurch gekennzeichnet, dass** ein federndes Verschlusssystem (6), das mittig auf der Rückseite des Radgestells (1) angeordnet ist, die schwenkbare Deichsel (2) am Radgestell (1) hält und somit ermöglicht, eine ähnliche Steifigkeit wie bei einer nicht mit einem Kran tragbaren Standardschubkarre zu erreichen.
